# EUROPEAN PATENT APPLICATION

(11) **EP 4 401 421 A1**
(43) Date of publication of application: **17.07.2024**
(21) Application number: 23759284.5
(22) Date of filing: 24.02.2023
(51) Int. Cl.: H04R 1/10, H04R 3/00

(54) **CHARGING CASE**

(30) Priority: 25.02.2022 CN 202210178137
(71) Applicant: Shenzhen Shokz Co., Ltd., Shenzhen, Guangdong 518108 (CN)
(72) Inventor: WANG, Yonggen, Shenzhen, Guangdong 518108 (CN); XU, Jiang, Shenzhen, Guangdong 518108 (CN); JI, Ao, Shenzhen, Guangdong 518108 (CN)
(74) Representative: Wang, Bo
(86) International application number: PCT/CN2023/078242
(87) International publication number: WO 2023/160662

(57) **Abstract**

The present disclosure discloses a charging box including a first housing assembly. The first housing assembly may include a main box body with an opening at one end as an open end of the main box body and a support plate covering over the open end of the main box body. The support plate may be provided with one or more profiling grooves for accommodating earphones. The support plate may be provided with a first side edge and a second side edge opposite to each other. A depth of a portion of the profiling grooves near the first side edge may be greater than a depth of a portion of the profiling grooves near the second side edge. In the present disclosure, the depth of the portion of the profiling grooves near the first side edge of the support plate is greater than the depth of the portion of the profiling grooves near the second side edge of the support plate, which can make the profiling grooves disposed in an inclined state, and some elements may be disposed on the same horizontal plane where the deepest position of the profiling grooves is located and may not overlap with the deepest position of the profiling grooves, so as to reduce a total height of other elements and the profiling grooves disposed on the charging box in a thickness direction. In this way, a size of the charging box may be reduced, which improves portability and also reduces the production cost.

## Description

### CROSS REFERENCE TO RELATED APPLICATIONS

This application claims priority to Chinese Patent Application No. 202210178137.0, filed on February 25, 2022, the entire contents of which are incorporated herein by reference.

### TECHNICAL FIELD

The present disclosure relates to a technical field of sound generation device, and in particular, to a charging box.

### BACKGROUND

Earphones have been widely used in people's daily life, and the earphones can be used in conjunction with cell phones, computers, and other electronic devices to provide users with an auditory feast. Usually, the earphones are equipped with a charging box that is compatible with the earphones, and the charging box is used to charge the earphones.

### TECHNICAL ISSUES

The charging box is large in size, which is difficult to carry, and expensive to produce.

### TECHNICAL SOLUTIONS

In view of the above, in order to solve the aforementioned technical problem, the present disclosure provides a charging box including a first housing assembly. The first housing assembly may include a main box body with an opening at one end, and a support plate covering at the open end of the main box body. The support plate may be disposed with a profiling groove for accommodating the earphones.

The support plate may be disposed with a first side edge and a second side edge disposed opposite to each other. A depth of a portion of the profiling region close to the first side edge may be greater than the depth of a portion of the profiling region close to the second side edge.

### BENEFICIAL EFFECTS

Different from the prior art, in the present disclosure, the depth of the portion of a profiling groove close to the first side edge of the support plate is greater than the depth of the portion of the profiling groove close to the second side edge of the support plate, which can make the profiling groove disposed in an inclined state, and some elements may be disposed on the same horizontal plane where the deepest position of the profiling groove is located and may not overlap with the deepest position of the profiling groove, so as to reduce a total height of other elements and the profiling groove disposed on the charging box in a thickness direction. In this way, a size of the charging box may be reduced, which improves portability and also reduces the production cost.

### BRIEF DESCRIPTION OF THE DRAWINGS

To more clearly illustrate the technical solutions of the embodiments of the present disclosure, the drawings need to be used in the embodiments or descriptions of the prior art will be briefly introduced below. Obviously, the drawings in the following description are only some embodiments of the present disclosure. For those of ordinary skill in the art, other drawings may be obtained based on these drawings without creative labor., wherein:
FIG. 1 is a schematic diagram illustrating a structure of an earphone assembly according to some embodiments of the present disclosure;
FIG. 2 is a schematic diagram illustrating a structure of a charging box according to an embodiment in FIG. 1;
FIG. 3 is a schematic diagram illustrating a first structure of a support plate according to an embodiment in FIG. 2;
FIG. 4 is a schematic diagram illustrating a second structure of the support plate according to an embodiment in FIG. 2;
FIG. 5 is a front view of the support plate according to an embodiment in FIG. 2;
FIG.6 is a schematic diagram illustrating a section of the support plate along an A-A cross-section in FIG.5;
FIG. 7 is a schematic diagram illustrating a structure of a main box body according to an embodiment in FIG. 2;
FIG. 8 is a schematic diagram illustrating a structure of a circuit board in FIG. 2;
FIG.9 is a schematic diagram illustrating a cooperation between the support plate and the circuit board in FIG.2;
FIG. 10 is a schematic diagram illustrating a structure of a fourth housing according to an embodiment in FIG. 2;
FIG. 11 is a schematic diagram illustrating a structure of a rotary connection assembly according to an embodiment in FIG. 2;
FIG. 12 is a schematic diagram illustrating a first circuit of a charging box according to some embodiments of the present disclosure;
FIG. 13 is a schematic diagram illustrating a second circuit of a charging box according to some embodiments of the present disclosure;
FIG. 14 is a schematic diagram illustrating a third circuit of a charging box according to some embodiments of the present disclosure;
FIG. 15 is a schematic diagram illustrating a switching circuit according to an embodiment in FIG. 14;
FIG. 16 is a schematic diagram illustrating a first structure of earphones according to an embodiment in FIG. 1;
FIG. 17 is a schematic diagram illustrating a second structure of earphones according to an embodiment in FIG. 1;
FIG. 18 is a schematic diagram illustrating a third structure of earphones according to an embodiment in FIG. 1; and
FIG. 19 is a schematic diagram illustrating a circuit of earphones according to the embodiment of the present disclosure.

### DETAILED DESCRIPTION

To enable those skilled in the art to better understand the technical solutions of the present disclosure, the charging box disposed herein is described in further detail below in conjunction with the accompanying drawings and specific embodiments. It may be understood that the described embodiments are only a part of the embodiments of the present disclosure, and not all of them. Based on the embodiments of the present disclosure, all other embodiments obtained by those skilled in the art without making creative labor may fall within the scope of protection of the present disclosure.

The terms "first", "second", etc., in the present disclosure are used to distinguish different objects and are not used to describe a particular order. Additionally, the terms "comprising", "including", and "having", and any variations thereof, are intended to cover non-exclusive objects. For example, a process, method, system, product, or device including a series of operations or units is not limited to listed operations or units, but also optionally includes operations or units that are not listed, or other operations or units inherent to the process, method, product, or device.

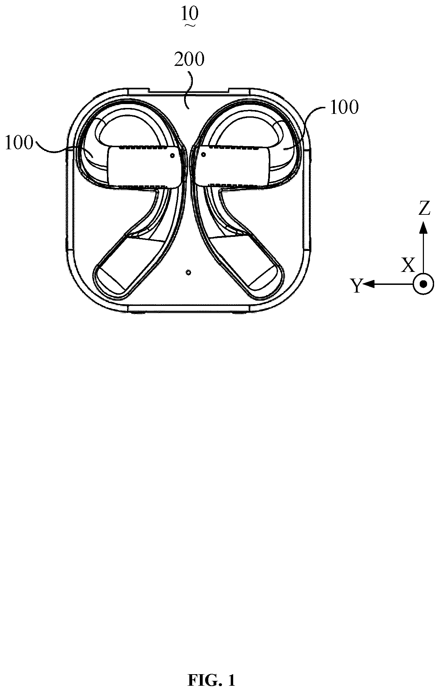

The present disclosure provides a charging assembly. Referring to FIG.1, FIG.1 is a schematic diagram illustrating a structure of an earphone assembly according to the embodiment of the present disclosure. As shown in FIG.1, an earphone assembly 10 may include earphones 100 and a charging box 200. Specifically, when the charging box 200 is opened, the earphones 100 may be disposed in the charging box 200 to allow the charging box 200 to charge the earphones 100.

In some embodiments, the earphone assembly 10 may include two earphones 100, respectively corresponding to the left ear and the right ear of a person. When any one of the two earphones 100 is placed inside the charging box 200, and the charging box 200 detects that a power level of the earphone 100 is less than a preset threshold, the earphone 100 may be charged until the power level is 100%. In some embodiments, the preset threshold may be 90%.

Additionally, when the two earphones 100 are placed in the charging box 200, the charging box 200 may perform a charging operation on the two earphones 100 when detecting that both the power levels of the two earphones 100 are less than the preset threshold.

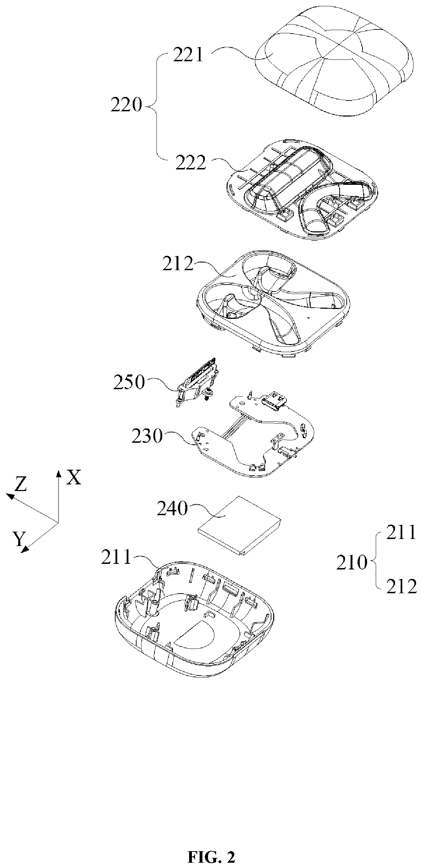

In conjunction with FIG. 1, further reference may be made to FIG. 2, which is a schematic diagram illustrating a structure of the charging box according to the embodiment in FIG. 1. As shown in FIG.2, the charging box 200 may include a first housing assembly 210, a second housing assembly 220, a circuit board 230, a battery 240, and a rotary connection assembly 250. The first housing assembly 210 may be pivotally connected to the second housing assembly 220.

In some embodiments, the first housing assembly 210 may include a main box body 211 with an opening at one end as an open end of the main box body 211 and a support plate 212 covering over the open end of the main box body 211. An accommodation space 214 may be formed between the main box body 211 and the support plate 212, and the circuit board 230, the battery 240, and the rotary connection assembly 250 may be disposed in the accommodation space 214.

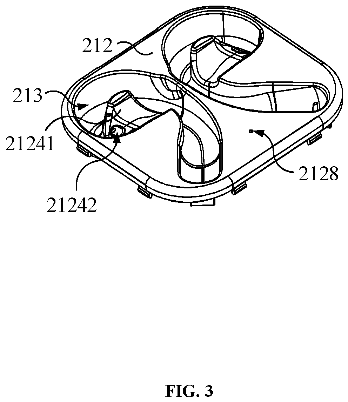

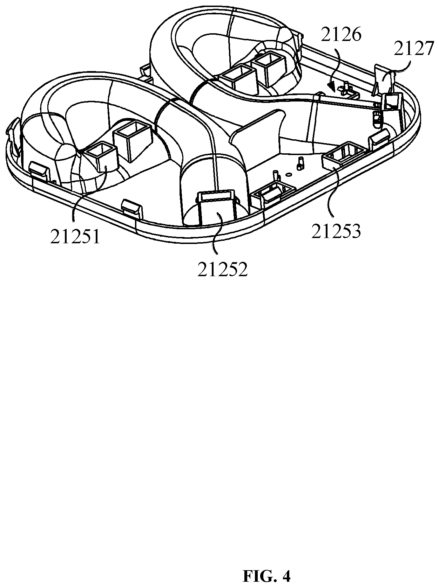

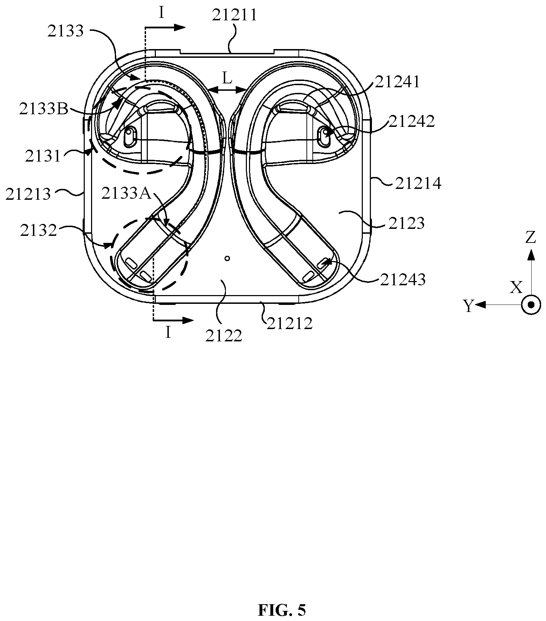

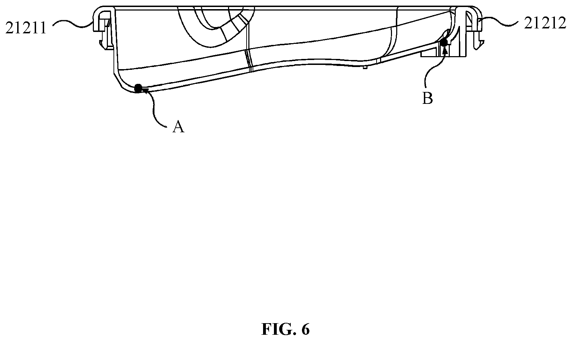

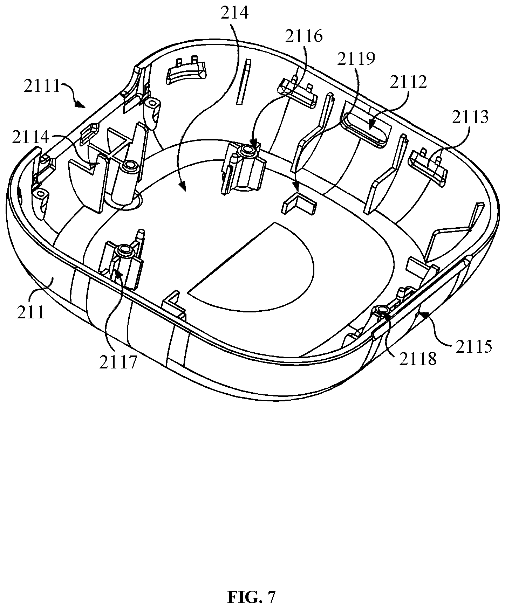

Combined with FIG.2, further referring to FIGs. 3-7, FIG. 3 is a schematic diagram illustrating a first structure of the support plate according to the embodiment in FIG. 2, FIG. 4 is a schematic diagram illustrating a second structure of the support plate according to the embodiment in FIG. 2, FIG. 5 is a front view of the support plate according to the embodiment in FIG. 2, FIG. 6 is a schematic diagram illustrating a section of the support plate along an a-a cross-section in FIG.5, and FIG.7 is a schematic diagram illustrating a structure of the main box body according to the embodiment in FIG. 2.

As shown in FIG. 3 and FIG. 5, the support plate 212 may be provided with one or more profiling grooves 213 for accommodating the earphones 100. In some embodiments, the support plate 212 may be provided with a first side edge 21211 and a second side edge 21212 opposite to each other, and a third side edge 21213 and a fourth side edge 21214 opposite to each other. The third side edge 21213 and the fourth side edge 21214 may be used to connect the first side edge 21211 and the second side edge 21212.

The profiling groove 213 may include a first profiling region 2131, a second profiling region 2132, and a third profiling region 2133. The third profiling region 2133 may be used for connecting the first profiling region 2131 and the second profiling region 2132. The first profiling region 2131 may be disposed close to the first side edge 21211, and the second profiling region 2132 may be disposed close to the second side edge 21212.

The third profiling region 2133 may include a first boundary 2133A and a second boundary 2133B formed at both ends of an arc segment. The third profiling region 2133 may be connected to the second profiling region 2132 through the first boundary 2133A, and connected to the first profiling region 2131 through the second boundary 2133B.

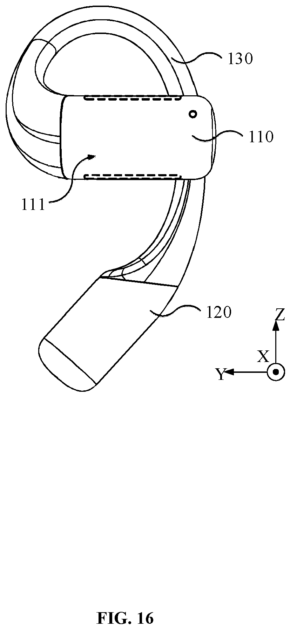

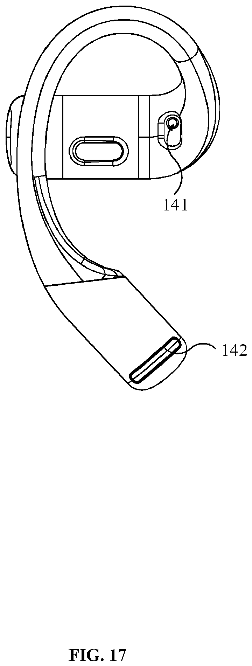

Further reference may be made to FIG. 16 and FIG. 17. FIG. 16 is a schematic diagram illustrating a first structure of an earphones according to an embodiment in FIG. 1, and FIG. 17 is a schematic diagram illustrating a second structure of an earphones according to an embodiment in FIG. 1. As shown in FIG. 16, the earphones 100 may include a main body portion 110, a battery portion 120, and an elastic connection portion 130. The elastic connection portion 130 may be configured to connect the main body portion 110 to the battery portion 120. As shown in FIG. 17, the main body portion 110 of the earphones 100 may be provided with a first power receiving electrode 141 on a side close to a human ear in a wearing state, and the battery portion 120 may be provided with a second power receiving electrode 142 on the side close to the human ear in the wearing state.

The elastic connection portion 130 may connect the main body portion 110 to the battery portion 120 to make the earphones 100 curved in a three-dimensional (3D) space when the earphones 100 are in a non-wearing state (i.e., a natural state). That is, the main body portion 110, the battery portion 120, and the elastic connection portion 130 may not be coplanar in the 3D space. When the earphones 100 are in the wearing state, the main body portion 110 may be configured to contact an anterior side of the ear of a user, and the battery portion 120 and a portion of the elastic connection portion 130 may be configured to be hooked up between a posterior side of the ear of the user and the head of the user. The portion of the elastic connection portion 130 may extend from the head toward an outer side of the head and cooperate with the main body portion 110 to provide a compression force on the anterior side of the ear, which in turn realize a cooperation among the main body portion 110, the elastic connection portion 130, and the battery portion 120 to clamp the ear.

In some embodiments, a ratio of a length of the elastic connection portion 130 in a third direction Z to a length of the battery portion 120 in the third direction Z may be greater than or equal to 100%, and preferably, the aforementioned ratio may be greater than or equal to 150%. A projection of the battery portion 120 on an X-Y plane may be located within a projection of the elastic connection portion 130 on the X-Y plane. A cross-sectional area of at least a part of the battery portion 120 may be greater than a maximum cross-sectional area of the elastic connection portion 130. In this embodiment, the battery portion 120 may be in a form of a columnar shape, and a ratio between the length and an outer diameter of the battery portion 120 may be less than or equal to 6.

The first profiling region 2131 may be configured to accommodate the main body portion 110 of the earphones 100, the second profiling region 2132 may be configured to accommodate the battery portion 120 of the earphones 100, and the third profiling region 2133 may be configured to accommodate the elastic connection portion 130 of the earphones 100. In some embodiments, as shown in FIG. 1, the earphones 100 may be disposed inside the charging box 200 along an opposite direction of a first direction X, and the side provided with the first power receiving electrode 141 and the second power receiving electrode 142 of the earphones 100 may be disposed near the profiling grooves 213.

As shown in FIG. 4 and FIG. 6, the depth of a portion of the profiling grooves 213 close to the first side edge 21211 may be greater than the depth of another portion of the profiling grooves 213 close to the second side edge 21212. The depth of a portion of the first profiling region 2131 may be less than the depth of the second profiling region 2132, and the depth of a portion of the third profiling region 2133 close to the first side edge 21211 may be greater than the depth of the second profiling region 2132 and greater than the depth of the first profiling region 2131.

An angle between a line connecting a lowest point A and a highest point B, and a plane parallel to a side of the support plate 212 forming the profiling grooves may be in a range of 10°-60°. The lowest point A refers to the lowest point of a surface of one side of the third profiling region 2133 forming the profiling grooves 213 relative to the support plate 212; and the highest point B refers to the highest point of a surface of one side of second profiling region 2132 forming the profiling grooves 213 relative to the support plate 212. Specifically, the highest point B is a connection point of the second power receiving electrode 142 of the earphones 100 and the second profiling region 2132.

As the user wears the earphones 100 for a long time period, sweat may remain on the earphones 100. In this embodiment, the depth of the second profiling region 2132 for accommodating the battery portion 120 may be less than the depth of the third profiling region 2133 for accommodating the elastic connection portion 130 of the earphones 100, and correspondingly, the depth of the first power receiving electrode 141 of the first profiling region 2131 may be less than the depth of the lowest point A to enable the remaining sweat to flow down to the lowest point A along the first profiling grooves 213. In this way, the remaining sweat may be prevented from contacting the first power receiving electrode 141 on the main body portion 110 and the second power receiving electrode 142 on the battery portion 120 which results in an occurrence of a short circuit.

As shown in FIG. 17, the main body portion 110 of the earphones 100 may include a housing 111, a core (not shown), and a main board (not shown). The housing 111 may form an accommodation cavity (not shown), the core and the main board may be disposed in the accommodation cavity, and the main board may be disposed with a second microprocessor 112.

In some embodiments, a button (not shown) may be disposed on a side of the housing 111 depart from the elastic connection portion 130, and the button may be electrically connected to the second microprocessor 112. Alternatively, the button may be a physical button, a touch button, etc., and specifically may be interaction assemblies such as the physical button, a display, a touch circuit board, etc.

The button may generate a button trigger signal in response to detecting a signal input by a user, and the second microprocessor 112 may receive the generated button trigger signal and be configured to detect whether an in-box state signal of the earphones 100 is received, then execute a corresponding function based on the button trigger signal and the in-box state signal.

When detecting the in-box state signal, the second microprocessor 112 may determine that the earphones 100 are placed in the charging box 200 and control the earphones 100 to execute a first function when receiving the button trigger signal generated by the button. When failing to detect the in-box state signal, the second microprocessor 112 may determine that the earphones 100 are not placed in the charging box 200 and control the earphones 100 to execute a second function when receiving the button trigger signal generated by the button.

In some embodiments, the first function may include at least one of coupling the earphones 100 with a communication device or restoring the earphones 100 to its factory settings, and the second function may include at least one of pausing or playing, fast forwarding or rewinding, and switching songs.

In the embodiment, by multiplexing the functions of the button, different functions may be implemented through the same button when the earphones 100 are placed inside and outside the charging box 200, thereby reducing a count of buttons and a cost, and simplifying the structure at the same time.

As shown in FIG. 5, the profiling grooves 213 may include two profiling grooves 213 for accommodating the two earphones 100, respectively. The two profiling grooves 213 may be disposed in the manner of a mirror image, so that the two earphones 100 disposed in the profiling grooves 213 may also be disposed in mirror image. Therefore, the earphone 100 worn on the left ear by the user is disposed in a left profiling groove 213, and the earphone 100 worn on the right ear by the user is disposed in a right profiling groove 213, which conforms to a habit of the human to take the earphones, and facilitates the user to take the two earphones. Meanwhile, the two earphones 100 may be firmly placed in the charging box 200.

A spacing L between the two third profiling regions 2133 of the two profiling grooves 213 may gradually decrease and then gradually increase in a direction from the first side edge 21211 to the second side edge 21212. In some embodiments, the spacing L may be a spacing between adjacent sidewalls of the two third profiling regions 2133 of the two profiling grooves 213.

As shown in FIG. 4, the side of the support plate 212 depart from the profiling groove 213 may be further provided with two groups of magnet mounting grooves 21251 and 21252 for placing a first magnet (not shown). As the elastic connection portion 130 of the earphones 100 is susceptible to deformation after being worn for a long time period, when the earphones 100 are placed inside the profiling grooves 213, a second magnet inside the earphones 100 may attract to the first magnet, so as to enable the earphones 100 to be fit more closely into the profiling grooves 213, and at the same time minimize a possibility of the earphones 100 from accidentally dropping out of the profiling grooves 213.

Each group of magnet mounting grooves 21251 may include two first magnets, and the attraction force between the first magnets and the second magnet may be strengthened by disposing the two first magnets. In this way, the main body portion 110, which is of a greater weight, may be fixed in position, so as to reduce a possibility of the earphones 100 shaking in the profiling grooves 213.

In some embodiments, the side of the support plate 212 depart from the profiling grooves 213 may also be provided with a fastener 2127. As shown in FIG. 7, an inner wall of the main box body 211 may be provided with a snap groove 2113, and the fastener 2127 and the snap groove 2113 may engage with the main box body 211 and the support plate 212 to form the first housing assembly 210. Alternatively, in other embodiments, a blind hole and a blind post, a magnet, or other manners may also be used for coupling.

As shown in FIG. 5, the support plate 212 may include a first flat region 2122 located between the two third profiling regions 2133 of the two profiling grooves 213 and close to the second side edge 21212, and two second flat regions 2123 located on two sides of the two third profiling regions 2133 of the two profiling grooves 213 and close to the third side edge 21213 and the fourth side edge 21214, respectively.

When the circuit board 230 is disposed in the accommodation space 214 of the first housing assembly 210, a projection of the circuit board 230 on a bottom wall of the main box body 211 along the first direction X may be close to a projection of the second side edge 21212 of the support plate 212 on the bottom wall of the main box body 211 along the first direction X. In some embodiments, the projection of the circuit board 230 on the bottom wall of the main box body 211 along the first direction X may overlap with the projection of the first flat region 2122 on the bottom wall of the main box body 211 along the first direction X. The projection of the circuit board 230 on the bottom wall of the main box body 211 along the first direction X may overlap with a projection of at least one of the two second flat regions 2123 on the bottom wall of the main box body 211 along the first direction X.

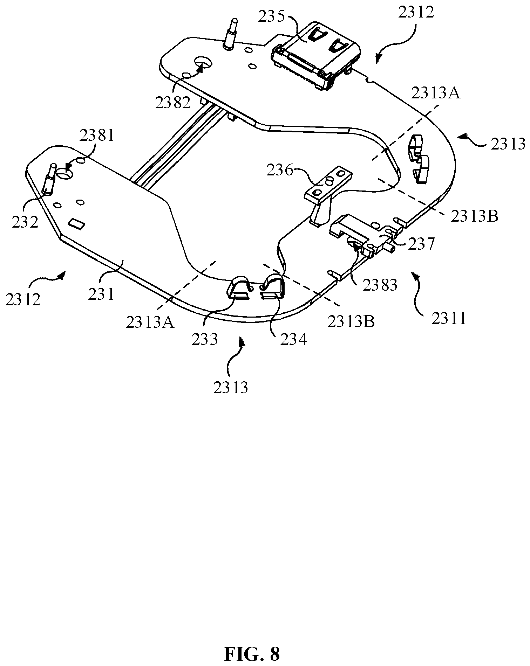

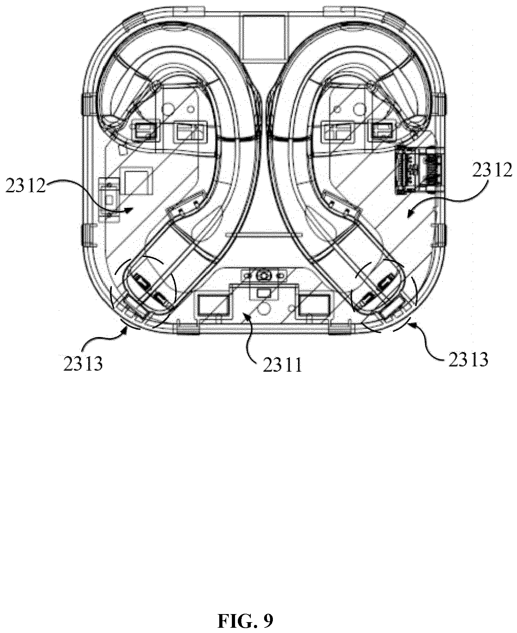

Combined with FIG. 5, further reference may be made to FIG. 8 and FIG. 9. FIG.8 is a schematic diagram illustrating a structure of a circuit board in FIG. 2, and FIG. 9 is a schematic diagram illustrating a cooperation between the support plate and the circuit board in FIG. 2. As shown in FIG. 8, one side of the circuit board 230 close to the support plate 212 may be provided with a second power supply electrode 232, a first power supply electrode 233, and a detection electrode 234. As shown in FIGs. 8 and 9, the circuit board 230 may include a first circuit region 2311, a second circuit region 2312, and a connection region 2313.

In some embodiments, a shape of the connection region 2313 may be approximately a ring, which corresponds to an arc transition portion between the second side edge 21212 and the third side edge 21213 on the support plate 212, or corresponds to an arc transition portion between the second side edge 21212 and the fourth side edge 21214 on the support plate 212. Two ends of the connection region 2313 may be connected to the first circuit region 2311 and the second circuit region 2312, respectively. The second circuit region 2312 may be used to dispose the second power supply electrode 232, and the connection region 2313 may be used to dispose the first power supply electrode 233 and the detection electrode 234.

In some embodiments, the connection region 2313 may include a first boundary 2313A and a second boundary 2313B. The first boundary 2313A may be parallel to the first side edge 21211 and the second side edge 21212, and the second boundary 2313B may be parallel to the third side edge 21213 and the fourth side edge 21214. The connection region 2313 may be connected to the second circuit region 2312 through the first boundary 2313A, and connected to the first circuit region 2311 through the second boundary 2313B.

In some embodiments, there are two groups of second circuit regions 2312 and two groups of connection regions 2313, the two groups of second circuit regions 2312 and the two groups of connection regions 2313 may be respectively connected to the two ends of the first circuit region 2312 in a direction of the spacing of the third side edges 21213 and the fourth side edges 21214, so as to make the circuit board 230 in a form of a U-shape. The circuit board 230 may be symmetrically disposed along a centerline of the first circuit region 2311. Two groups of second power supply electrodes 232 respectively disposed at the two groups of the second circuit regions 2312, two groups of first power supply electrodes 233 respectively disposed at the two groups of the connection regions 2313, and two groups of detection electrodes 234 respectively disposed at the two groups of connection regions 2313 may be disposed symmetrically along the centerline of the first circuit region 2311.

In some embodiments, a projection of the first circuit region 2311 on the bottom wall of the main box body 211 along the first direction X may overlap with the projection of the first flat region 2122 on the bottom wall of the main box body 211 along the first direction X.

The projection of the second circuit region 2312 on the bottom wall of the main box body 211 along the first direction X may overlap with the projection of the second flat region 2123 on the bottom wall of the main box body 211 along the first direction X, and the projection of the second circuit region 2312 on the bottom wall of the main box body 211 may overlap with the projection of the first profiling region 2131 on the bottom wall of the main box body 211.

The connection region 2313 may be connected to the first circuit region 2311 and the second circuit region 2312, and a projection of the connection region 2313 on the bottom wall of the main box body 211 along the first direction X may overlap with the projection of the second profiling region 2132 on the bottom wall of the main box body 211 along the first direction X.

An overlap area between the connection region 2313 and the second profiling region 2132 may be smaller than an overlap area between the first circuit region 2311 and the first flat region 2122, and the overlap area between the connection region 2313 and the second profiling region 2132 may be smaller than an overlap area between the second circuit region 2312 and the second flat region 2123. A large portion of the circuit board 230 may be disposed at a position that does not overlap with the profiling grooves 213, and the circuit board 230 may not overlap the third profiling region 2133, i.e., in a horizontal plane, the circuit board 230 may not overlap with the deepest position of the profiling grooves 213, so as to reduce a total height of the circuit board 230 and the profiling groove 213 disposed on the charging box 200 in a thickness direction of the charging box 200. In this way, a size of the charging box 200 may be reduced, which improves portability, and reduces a production cost simultaneously.

In some embodiments, an overlap area between the projection of the circuit board 230 on the bottom wall of the main box body 211 and a projection of the third profiling region 2133 on the bottom wall of the main box body 211 may be less than 5% of a total projection area of the circuit board 230 on the bottom wall of the main box body 211. For example, the overlap area may be 5%, 4%, 3%, 2%, 1%, or 0%, where 0% indicates that the projection of the circuit board 230 on the bottom wall of the main box body 211 and the projection of the third profiling region 2133 on the bottom wall of the main box body 211 are completely non-overlapping.

As shown in FIG. 3 and FIG. 5, the first profiling region 2131 may include a boss 21241 and a charging port 21242 disposed on a side of the boss 21241 to expose the second power supply electrode 232 at the charging port 21242. The second profiling region 2132 may be provided with a through hole 21243 to expose the first power supply electrode 233 and the detection electrode 234 at the through hole 21243.

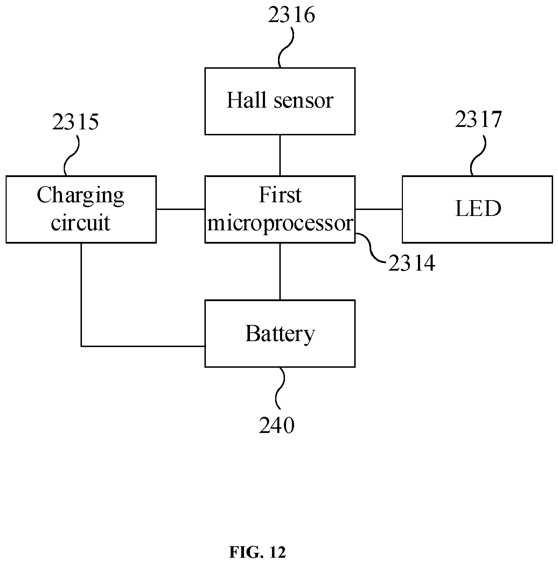

Further reference may be made to FIG. 12, which is a schematic diagram illustrating a first circuit of a charging box according to some embodiments of the present disclosure. As shown in FIG. 12, the charging box 200 may include a first microprocessor 2314 and a charging circuit 2315 disposed on a circuit board 230. The first microprocessor 2314 may be connected to the charging circuit 2315 and the battery 240, and the charging circuit 2315 may be connected to the second power supply electrode 232 and the first power supply electrode 233.

In some embodiments, the second power supply electrode 232 may be a Pogopin, and the first power supply electrode 233 and the detection electrode 234 may be poppet electrodes. The detection electrode 234 and the first power supply electrode 233 may be disposed in a V-shape opposite to each other. For example, two surfaces of the detection electrode 234 and the first power supply electrode 233 opposite to each other may substantially form a V-shape structure. In this embodiment, the second power supply electrode 232 may be a charging positive electrode, and the first power supply electrode 233 may be a charging negative electrode.

In some embodiments, when the earphones 100 are placed in the profiling grooves 213, the first power receiving electrode 141 may abut against the second power supply electrode 232, and the second power receiving electrode 142 may abut against both the first power supply electrode 233 and the detection electrode 234, so as to make the charging circuit 2315 charge the earphones 100 placed in the charging box 200 through the charging circuit formed by the second power supply electrode 232 and the first power supply electrode 233.

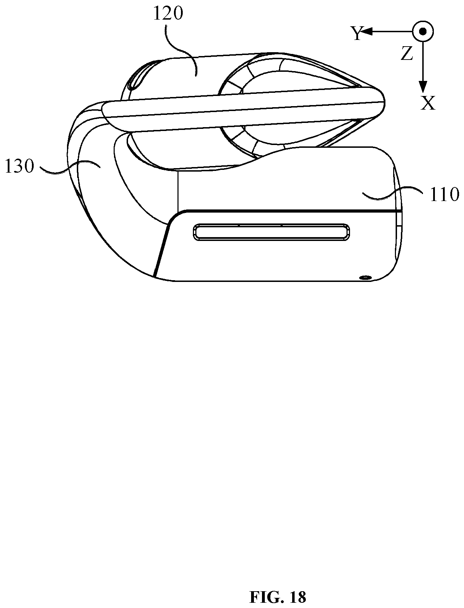

Further reference may be made to FIG. 18, which is a schematic diagram illustrating a third structure of earphones according to the embodiment in FIG. 1. As shown in FIG. 18, the main body portion 110 of the earphones 100 may not be at the same level as the battery portion 120. When the earphones 100 are placed in the profiling grooves 213, the main body portion 110 and a part of the elastic connection portion 130 connected to the main body portion 110 may surround the boss 21241 to make the earphones 100 fit to the profiling grooves 213, and further make it easier for the first power receiving electrode 141 to abut against the second power supply electrode 232.

In this embodiment, the second power receiving electrode 142 may be a strip electrode or a ring electrode such that the earphones 100 may be placed in the profiling grooves 213, and the second power receiving electrode 142 may fully abut against the first power supply electrode 233 and the detection electrode 234. At the same time, the detection electrode 234 and the first power supply electrode 233 disposed opposite to each other in the V shape may better support and fix the battery portion 120 of the earphones 100, thereby preventing the movement of the earphones 100 that causes the second power receiving electrode 142 to be electrically disconnected from the first power supply electrode 233 and/or the detection electrode 234.

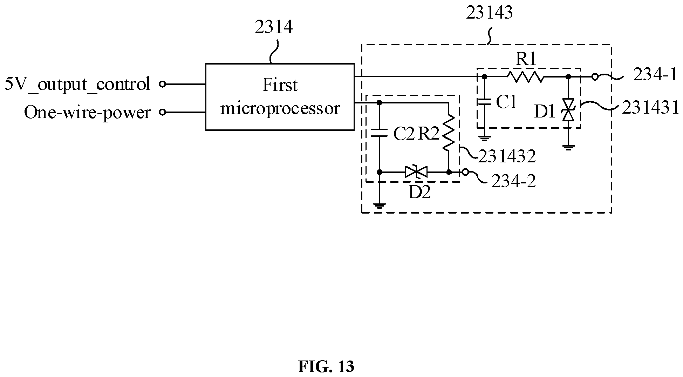

In this embodiment, before the charging circuit 2315 charges the earphones 100 placed in the charging box 200, it needs to detect whether the earphones 100 are placed in the charging box 200. Further reference may be made to FIG. 13, which is a schematic diagram illustrating a second circuit of a charging box according to some embodiments of the present disclosure. As shown in FIG.13, the charging box 200 may include a detection circuit 23143. The detection circuit 23143 may be connected to the first microprocessor 2314 and a connection end of the detection electrode 234.

When the earphones 100 are placed in the charging box 200, the second power receiving electrode 142 may simultaneously abut against the first power supply electrode 233 and the detection electrode 234, so that the detection electrode 234 may be shorted to the first power supply electrode 233 while the first power supply electrode 233 is the charging negative electrode. Therefore, a level of the detection electrode 234 may be pulled down, which in turn produces a level change. When the earphones 100 are not placed in the charging box 200, then the level of the detection electrode 234 may remain unchanged.

The detection circuit 23143 may generate a detection signal corresponding to the in-box state of the earphones 100 through detecting the level change of the detection electrodes 234, and transmit the detection signal to the first microprocessor 2314 to notify the first microprocessor 2314 of the in-box state of the earphones 100.

As shown in FIG. 13, the detection circuit 23143 may include a first sub-detection circuit 231431 and a second sub-detection circuit 231432, which are used for detecting the in-box state of the two earphones 100, respectively. There may be two groups of detection electrodes 234 and two groups of first power supply electrodes 233. When the two earphones 100 are placed inside the charging box 200, the second power receiving electrode 142 of one of the earphones 100 may abut against one of the two groups of detection electrodes 234 and one of the two groups of first power supply electrodes 233. The second power receiving electrode 142 of the other of the earphones 100 may abut against the other of the two groups of detection electrodes 234 and the other of the two groups of first power supply electrodes 233. In this embodiment, the first sub-detection circuit 231431 and the second sub-detection circuit 231432 may perform in-box detections on the two earphones 100 by respectively detecting level changes of a detection electrode 234-1 and a detection electrode 234-2.

The first sub-detection circuit 231431 may include a resistor R1, a diode D1, and a capacitor C1. One end of the resistor R1 may be connected to the first microprocessor 2314 and one end of the capacitor C1, and the other end of the capacitor C1 may be grounded. The other end of the resistor R1 may be connected to a connection end of the detection electrode 234-1 and one end of the diode D1, and the other end of the diode D1 may be grounded.

The second sub-detection circuit 231432 may include a resistor R2, a diode D2, and a capacitor C2. One end of the resistor R2 may be connected to the first microprocessor 2314 and one end of the capacitor C2, the other end of the resistor R2 may be connected to the connection end of the detection electrode 234-2 and one end of the diode D2, and the other end of the capacitor C2 may be connected to the other end of the diode D2 and grounded.

The present embodiment of the charging box 200 may perform the in-box detection by detecting the level change of the detection electrode 234 through the detection circuit 23143. In this way, there may be no need to set up a separate complex detection device or circuit, thereby simplifying a circuit structure of the charging box 200 and reducing the cost.

When the charging box 200 determines that the earphones 100 have been placed in the charging box 200 based on the detection signal generated by the detection circuit 23143, the earphones 100 may be charged by the charging circuit 2315.

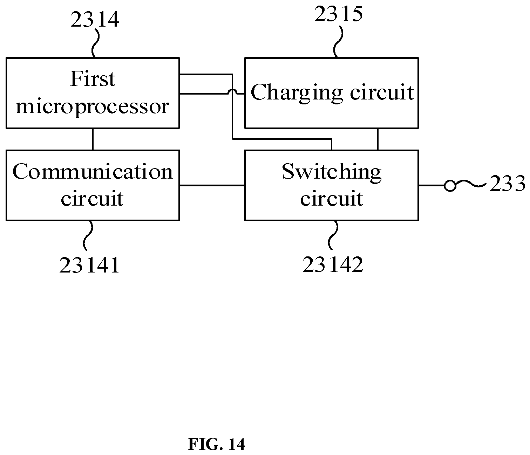

Combined with FIG. 12, further reference may be made to FIG. 14, which is a schematic diagram illustrating a third circuit of a charging box according to some embodiments of the present disclosure. As shown in FIG.14, the charging box 200 may include a switching circuit 23142 and a communication circuit 23141 disposed on the circuit board 230.

The switching circuit 23142 may be connected to the charging circuit 2315, the first power supply electrode 233, and the first microprocessor 2314, and the communication circuit 23141 may be connected to the first microprocessor 2314 and the switching circuit 23142. In some embodiments, the communication circuit 23141 may be a circuit independently disposed on the circuit board 230 or integrated within the first microprocessor 2314.

In this embodiment, the first microprocessor 2314 may control the switching circuit 23142 to make the charging circuit 2315 intermittently connected and disconnected to the first power supply electrode 233. The first microprocessor 2314 may be disposed to control the communication circuit 23141 to communicate with the earphones 100 through the first power supply electrode 2333 during a period in which the charging circuit 2315 is disconnected to the first power supply electrode 233, so as to send a power level query signal to the earphones 100.

In some embodiments, the charging circuit 2315 may be intermittently conducted and disconnected to the first power supply electrode 233 at a frequency of 5s⁻¹, i.e., in one period, a total duration of a time for the first microprocessor 2314 to control the charging circuit 2315 to charge the earphones 100 and a time for the first microprocessor 2314 to control the communication circuit 23141 to communicate with the earphones 100 may be 200 ms.

In one period, while the first microprocessor 2314 controls the charging circuit 2315 to complete the charging for the earphones 100 for a preset time, the charging circuit 2315 may be disconnected, and the communication circuit 23141 may be controlled to communicate with the earphones 100 for a preset time. In some embodiments, in the period, the time for charging may be 195ms and the time for communication may be 5ms, and this embodiment is not limited herein.

The first microprocessor 2314 may further control the charging circuit 2315 to be disconnected from the first power supply electrode 233 when a power level of the earphones fed back by the earphones 100 reaches a preset power level threshold, and control the communication circuit 23141 to send a power-off signal through the first power supply electrode 233 to the earphones 100.

In some embodiments, the first microprocessor 2314 may control the communication circuit 23141 to send an in-box state signal, a power level query signal, and a power-off signal to the second microprocessor 112 of the earphones 100. The second microprocessor 112 may send remaining power information to the charging box 200 according to the in-box state signal and the power level query signal, and control the earphones 100 to power off according to the power-off signal.

In some embodiments, the earphones 100 may further include a first detection circuit for detecting the in-box state of the earphones 100 and generate first in-box state information according to the in-box state of the earphones 100. The second microprocessor 112 may receive the in-box state signal generated by the detection circuit 23143 and/or the first in-box state information generated by the first detection circuit to determine that the earphones 100 are placed in the charging box 200.

When the second microprocessor 112 receives the in-box state signal, the second microprocessor 112 may determine that the earphones 100 are placed in the charging box 200. When the second microprocessor 112 does not receive the in-box state signal and receives the first in-box state information, the second microprocessor 112 may determine that the earphones 100 are placed in the charging box 200 and determines that the charging box 200 is faulty, so as to generate a failure reminder signal.

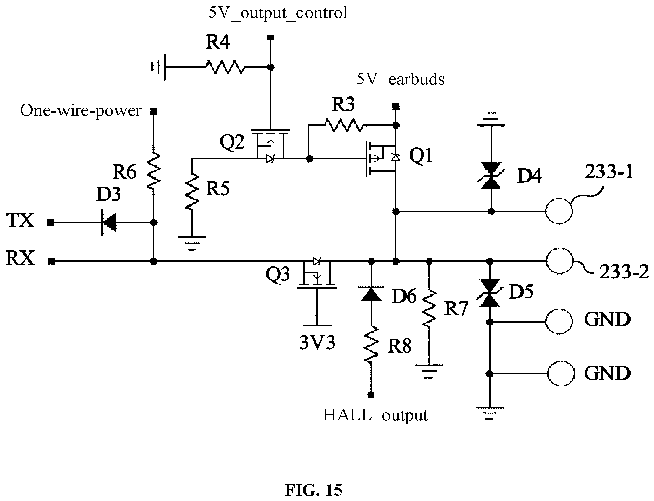

Combined with FIG. 14, further reference may be made to FIG. 15, which is a schematic diagram illustrating a switching circuit according to an embodiment in FIG. 14. As shown in FIG.15, the switching circuit 23142 may include a P-channel Metal Oxide Semiconductor(PMOS) tube Q1, an N-channel metal oxide semiconductor(NMOS) tube Q2, a resistor R3, a resistor R4, a resistor R5, a resistor R6, and a diode D3.

A source electrode of the PMOS tube Q1 may be connected to the charging circuit 2315 and one end of the resistor R3 to receive an output signal 5V_earbuds of the charging circuit 2315. A drain electrode of the PMOS tube Q1 may be connected to a connection end of the first power supply electrode 233, specifically, connected to a first power supply electrode 233-1 and a first power supply electrode 233-2, which correspond to the two groups of first power supply electrodes 233 that abut against the second power receiving electrodes 142 of the two earphones 100, respectively. A grid electrode of the PMOS tube Q1 may be connected to a drain electrode of the NMOS tube Q2 and the other end of the resistor R3. A source electrode of the NMOS tube Q2 may be connected to one end of the resistor R5, and the other end of the resistor R5 may be grounded. A grid electrode of the NMOS tube Q2 may be connected to the first microprocessor 2314 and one end of the resistor R4 to receive a control signal 5V_output_control output by the first microprocessor 2314, and the other end of the resistor R4 may be grounded.

One end of the resistor R6 may be connected to the first microprocessor 2314 to receive a pull-up voltage One_wire_power output by the first microprocessor 2314, and the other end of the resistor R6 may be connected to a positive pole of the diode D3 and a data receiving end RX of the communication circuit 23141. A negative pole of the diode D3 may be connected to a data sending end TX of the communication circuit 23141.

The charging box 200 may further include an anti-backflow device Q3. The anti-backflow device Q3 may be disposed between the connection end of the switching circuit 23142 and the first power supply electrode 233 and the communication circuit 23141 for preventing a charging current on the charging circuit from flowing backwards to the communication circuit 23141.

In some embodiments, a source electrode of the anti-backflow device Q3 may be connected to the other end of the resistor R6, and a drain electrode of the anti-backflow device Q3 may be connected to the connection end of the two groups of first power supply electrodes 233 (i.e., the first power supply electrode 233-1 and the first power supply electrode 233-2). A grid electrode of the anti-backflow device Q3 may be connected to the first microprocessor 2314 to output a reference voltage of 3.3V.

In some embodiments, the switching circuit 23142 may further include a resistor R7, a diode D4, and a diode D5. The resistor R7 may be used to prevent a short circuit. The diode D4 and the diode D5 may be used to prevent a static electricity. One end of the resistor R7 may be connected to the drain electrode of the anti-backflow device Q3 and one end of the diode D5. The other end of the resistor R7 and the other end of the diode D5 may be grounded, respectively. One end of the diode D4 may be connected to the drain electrode of the PMOS tube Q1, and the other end of the diode D4 may be grounded.

The switching circuit 23142 of the present embodiment may control the PMOS tube Q1 to conduct or cut off by receiving the control signal 5V output control output by the first microprocessor 2314, thereby achieving time-sharing multiplexing for charging and communication, which simplifies the circuit.

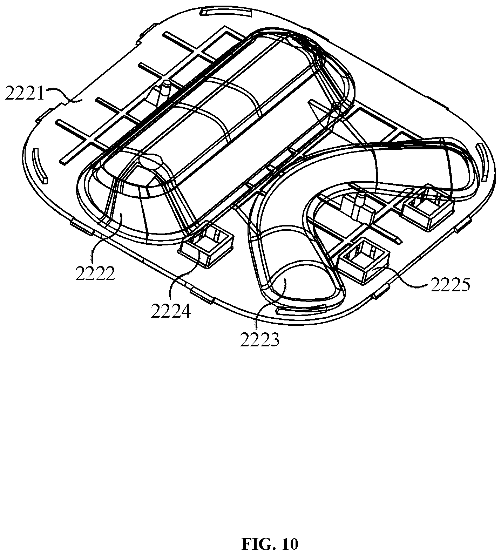

As shown in FIG. 2, the second housing assembly 220 may include a third housing 221 and a fourth housing 222. The third housing 221 may be sleeved outside the fourth housing 222 to form the second housing assembly 220. Combined with FIG. 2, further reference may be made to FIG. 10, which is a schematic diagram illustrating a structure of a fourth housing according to an embodiment in FIG. 2. As shown in FIG. 10, the fourth housing 222 may include a main board 2221, a first accommodation groove 2222, and a second accommodation groove 2223. The first accommodation groove 2222 and the second accommodation groove 2223 may be disposed on a side of the main board 2221 depart from the third housing 221. A projection of the first accommodation groove 2222 on the support plate 212 may overlap with the first profiling region 2131 and a portion of the third profiling region 2133, and a projection of the second accommodation groove 2223 on the support plate 212 may overlap with the second profiling region 2132 and a portion of the third profiling region 2133.

When the earphones 100 are placed in the profiling grooves 213, and the second housing assembly 220 covers over the first housing assembly 210, a part of the main body portion 110 of the earphones 100 that is exposed at the profiling grooves 213 may abut against the first accommodation groove 2222. A portion of the battery portion 120 of the earphones 100 that is exposed at the profiling grooves 213 may abut against the second accommodation groove 2223. In this way, the earphones 100 may be fixed.

As shown in FIG. 10, one side of the main board 2221 close to the third housing 221 may also be provided with a mounting groove 2224 for mounting a first Hall sensor (not shown). As shown in FIG. 4, one side of the support plate 212 depart from the profiling grooves 213 may also be provided with a mounting groove 2126 for mounting a second Hall sensor (not shown). As shown in FIG. 12, the charging box 200 may include a Hall sensor 2316. The Hall sensor 2316 may be electrically connected to the first microprocessor 2314. The Hall sensor 2316 may include the first Hall sensor and the second Hall sensor.

In this embodiment, when the charging box 200 is opened or closed, a distance between the first Hall sensor and the second Hall sensor may change, so as to generate a rising edge signal or a falling edge signal that is transmitted to the first microprocessor 2314 to notify the first microprocessor 2314 information about the charging box 200 being open or closed.

As shown in FIG. 12, the charging box 200 may further include a light-emitting diode (LED) 2317 disposed on the circuit board 230. The LED 2317 may be connected to the first microprocessor 2314. As shown in FIG. 8, the side of the circuit board 230 close to the support plate 212 may further be provided with a first light guide 236 and a second light guide 237.

The first housing assembly 210 and the second housing assembly 220 may form an outer housing of the charging box 200. The charging box 200 may further include an earphone power level indicator 2128 disposed inside the outer housing, and a charging box power level indicator 2115 visible from an outside of the outer housing for displaying information of the earphones 100 placed inside the charging box 200 and information of the charging box 200 itself, respectively.

As shown in FIG. 3, the earphone power level indicator 2128 may be disposed on the support plate 212, specifically disposed in the first flat region 2122, which is visible when the second housing assembly 220 is opened relative to the first housing assembly 210. The first light guide 236 may be used to guide light generated by the LED 2317 to the earphone power level indicator 2128 to display information corresponding to the earphones 100 (e.g., the power level or pairing of the earphones 100) by displaying different colors.

The first microprocessor 2314 may further select a relatively small power level from the power levels fed back from the two earphones 100, and control the earphone power level indicator 2128 to display a light of a color corresponding to the selected power level.

As shown in FIG. 7, the main box body 211 may be further provided with the charging box power level indicator 2115, and the second light guide 237 may be used to guide the light generated by the LED 2317 to the charging box power level indicator 2115, so as to make the charging box power level indicator 2115 display information corresponding to the charging box 200 (e.g., the power level of the charging box 200) by displaying different colors.

In this embodiment, there may be five groups of LEDs 2317, namely, a first LED, a second LED, a third LED, a fourth LED, and a fifth LED, which produce green light, green light, orange light, orange light, and white light, respectively. The first LED, the third LED, and the fifth LED may be used to display the information of the earphones 100, and the second LED and the fourth LED may be used to display the information of the charging box 200.

The first microprocessor 2314 may control the first LED, the third LED, or the fifth LED to produce green, orange, or white light based on the power level obtained from power level query information sent to the earphones 100 through the communication circuit 23141.

When the lowest power level of the two earphones 100 is less than 30%, the first microprocessor 2314 may control the third LED to be long-lighted, and when the lowest power level of the two earphones 100 is greater than 30%, the first microprocessor 2314 may control the first LED to be long-lighted. For example, the first microprocessor 2314 may control the first LED or the third LED to be long-lighted for 5 s according to a difference in the detected power level of the earphones 100. When the two earphones 100 are placed in the charging box 200 and a button of the earphones 100 is pressed for 3 s, the earphones 100 may enter a pairing state. At this time, the first microprocessor 2314 may control the fifth LED to blink for 3 minutes. If the pairing is successful during the 3 minutes, the first microprocessor 2314 may control the fifth LED to be long-lighted for 5 s. If the pairing fails during the 3 minutes, the first microprocessor 2314 may control the fifth LED to be off.

Meanwhile, the first microprocessor 2314 may obtain a remaining power level of the charging box 200 by detecting the power level of the battery 240. When the first microprocessor 2314 detects that the power level of the battery 240 is greater than 40%, the first microprocessor 2314 may control the second LED to be lighted, and when the first microprocessor 2314 detects that the power level of the battery 240 is less than 40%, the first microprocessor 2314 may control the fourth LED to be lighted. Specifically, the first microprocessor 2314 may control the second LED or the fourth LED to be long-lighted for 5 s according to the difference of the detected power level of the battery 240.

As shown in FIG. 8, the side of the circuit board 230 near the support plate 212 may also be provided with a charging interface 235. As shown in FIG. 7, the main box body 211 may also be provided with a through hole 2112. When the circuit board 230 is disposed within the accommodation space 214, the charging interface 235 may be snapped at the through hole 2112 so as to expose the charging interface 235 at the main box body 211.

The charging box 200 may be connected to an external power source through the charging interface 235 to enable charging for the charging box 200. For example, the charging interface 235 may be connected to the charging circuit 2315 to further charge the battery 240 through the charging circuit 2315.

In this embodiment, the charging circuit 2315 may be a charging management chip with functions of step-down charging and step-up discharging. When the charging box 200 is charged through the charging interface 235, the charging circuit 2315 may utilize the step-down charging function to receive an input voltage to charge the battery 240. When the charging box 200 is charging the earphones 100, the charging circuit 2315 may utilize the step-up discharging function to raise the voltage output by the battery 240 to the charging voltage of the earphones 100 to charge the earphones 100.

In other embodiments, the charging circuit 2315 may include a step-down charging circuit and a step-up discharging circuit, and the charging of the charging box 200 as well as the earphones 100 may be realized by the corresponding circuit.

As shown in FIG. 7, the bottom wall of the main box body 211 may be disposed with one or more positioning blocks 2119. The positioning blocks 2119 may be rightangled blocks, and the four positioning blocks 2119 may be symmetrically disposed with each other to form a cuboid for disposing and fixing a position of the battery 240.

As shown in FIG. 7, the bottom wall of the main box body 211 may be further provided with a first mounting hole 2117, a second mounting hole 2116, and a third mounting hole 2118. Projections of first mounting hole 2117 and the second mounting hole 2116 on the bottom wall of the main box body 211 may be close to the projection of the first side edge 21211 of the support plate 212 on the bottom wall of the main box body 211, and a projection of the third mounting hole 2118 on the bottom wall of the main box body 211 may be close to the projection of the second side edge 21212 of the support plate 212 on the bottom wall of the main box body 211.

As shown in FIG. 8, the side of the circuit board 230 close to the support plate 212 may also be provided with a first screw hole 2381, a second screw hole 2382, and a third screw hole 2383. The first screw hole 2381 and the second screw hole 2382 may be disposed in the second circuit region 2312 and close to the first charging electrode 232, respectively. The third screw hole 2383 may be disposed in the first circuit region 2311, and a projection of the third screw hole 2383 on the first circuit region 2311 may overlap with a projection of the second light guide 237 on the circuit board 230.

After placing the battery 240 in the accommodation space 214, the circuit board 230 may be disposed on the battery 240, and screwed into the first mounting hole 2117 and the first screw hole 2381, the second mounting hole 2116 and the second screw hole 2382, the third mounting hole 2118 and the third screw hole 2383, respectively. In this way, the circuit board 230 may be fixed in the accommodation space 214. Specifically, the side of the circuit board 230 depart from the support plate 212 may abut against the battery 240 to fix the battery 240.

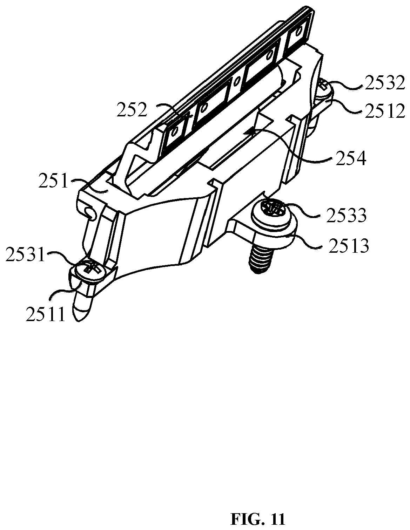

In the present disclosure, the first housing assembly 210 may be rotationally connected and the second housing assembly 220 through the rotary connection assembly 250. Combined with FIG. 2, further reference may be made to FIG. 11, which is a schematic diagram of the structure according to an embodiment of the rotary connection assembly in FIG. 2. As shown in FIG.11, the rotary connection assembly 250 may include a connection main board 251 and a rotary connection plate 252 rotationally connected to each other. A mounting groove 254 may be formed on a side of the connection main board 251 near the support plate 212, and the rotary connection plate 252 may be disposed in the mounting groove 254.

A first boss 2511 and a second boss 2512 may be formed on opposing sides of the connection main board 251, and a third boss 2513 may be formed on a third side adjacent to the two sides. The first boss 2511 may be disposed with a first mounting hole (not shown), the second boss 2512 may be disposed with a second mounting hole (not shown), and the third boss 2513 may be disposed with a third mounting hole (not shown).

As shown in FIG. 7, a side wall of the main box body 211 adjacent to the first side edge 21211 of the support plate 212 may be formed with an opening 2111. The main box body 211 may further include a mounting base 2114 disposed on an inner wall of the side wall where the opening 2111 is formed, and the mounting base 2114 may include a support seat and three screw holes.

When the first housing assembly 210 is cooperatively disposed with the rotary connection assembly 250, the connection main board 251 may be disposed at the opening 2111, the first mounting hole may be fixed with one of the screw holes of the mounting base 2114 by a first screw 2531. The second mounting hole may be fixed with another of the screw holes of the mounting base 2114 through a second screw 2532. The third mounting hole may be fixed with the last of the screw holes of the mounting base 2114 through a third screw 2533.

When the second housing assembly 220 is cooperatively disposed with the rotary connection assembly 250, the rotary connection plate 252 may be fixedly connected to the second housing assembly 220 through screws and screw holes, blind holes and blind posts, or magnets. The charging box 200 may drive the second housing assembly 220 to rotate by rotary connection plate 252 so that the second housing assembly 220 may be opened relative to the first housing assembly 210.

A rotation angle of the first housing assembly 210 relative to the second housing assembly 220 may be in a range of 0°-90°, and when the second housing assembly 220 covers over the first housing assembly 210, the angle between the second housing assembly 220 and the first housing assembly 210 may be 0°. When the second housing assembly 220 is fully open relative to the first housing assembly 210, the angle between the second housing assembly 220 and the first housing assembly 210 may be 90°.

In some embodiments, when an angle between the rotary connection plate 252 and a plane of the connection main board 251 parallel to the support plate 212 is greater than a preset angle, the rotary connection plate 252 may drive the second housing assembly 220 to autonomously move to a state of being fully opened, and the preset angle may be 45°, 30°, etc.

As shown in FIG. 10, a side of the main board 2221 close to the third housing 221 may be provided with a magnet mounting groove 2225. The magnet mounting groove 2225 may be disposed close to a side of the main plate 2221 adjacent to the second side edge 21212 of the support plate 212 for mounting and disposing a third magnet (not shown in the figure). As shown in FIG. 4, the side of the support plate 212 depart from the profiling grooves 213 may also be provided with a magnet mounting groove 21253. The magnet mounting groove 21253 may be disposed close to the second side edge 21212 for mounting and disposing a fourth magnet (not shown).

When the second housing assembly 220 covers over the first housing assembly 210, even though the charging box 200 is always in the closed state, the third magnet and the fourth magnet may attract each other so as to maintain an unchanged position of the second housing assembly 220 relative to the first housing assembly 210, which improves a closing reliability of the charging box 200 simultaneously.

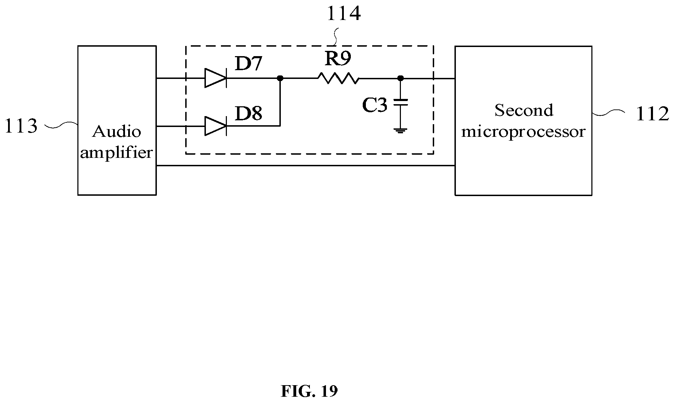

Combined with FIGs. 16 -18, further reference may be made to FIG. 19, which is a schematic diagram illustrating a circuit of earphones according to the embodiment of the present disclosure. As shown in FIG.19, the earphones 100 may include an electrostatic protection circuit 114 and an audio amplifier 113. The audio amplifier 113 may be connected to the second microprocessor 112, and the electrostatic protection circuit 114 may be connected to the second microprocessor 112 and the electrostatic protection circuit 114. The electrostatic protection circuit 114 may be used to convert an alternating current (AC) signal output by the audio amplifier 113 into a direct current (DC) signal. When a voltage value of the DC signal is less than a threshold voltage, the second microprocessor 112 may determine that the audio amplifier 113 is working abnormally and may send a reset signal to the audio amplifier 113 to make the audio amplifier 113 reset.

In some embodiments, as the second microprocessor 112 is connected to the electrostatic protection circuit 114 through an I/O port, pins of the I/O port may divide the voltage input to the second microprocessor 112, and a divided voltage may be generated. By detecting the voltage value of the divided voltage and comparing the voltage value of the divided voltage with the threshold voltage, the second microprocessor 112 may determine whether the output voltage of the electrostatic protection circuit 114 is abnormal, thereby determining whether the audio amplifier 113 works abnormally.

As shown in FIG. 19, the electrostatic protection circuit 114 may include a resistor R9, a capacitor C3, a diode D7, and a diode D8. A positive pole of the diode D7 may be connected to a first output end of the audio amplifier 113, a positive pole of the diode D8 may be connected to a second output of the audio amplifier 113. The positive pole of the diode D7 and the positive pole of the diode D8 may receive two AC signals output by the audio amplifier 113. A negative pole of the diode D7 may be connected to a negative pole of the diode D8 and one end of the resistor R9. The other end of the resistor R9 may be connected to the I/O port of the second microprocessor 112 and one end of the capacitor C3, and the other end of the capacitor C3 may be grounded. The other end of the capacitor C3 and the other end of the resistor R9 may form an output end of the electrostatic protection circuit 114.

The present embodiment provides the electrostatic protection circuit 114 between the audio amplifier 113 and the second microprocessor 112, and by means of the second microprocessor 112, the voltage detection may be performed on the I/O pins connected to the output end of the electrostatic protection circuit 114, which achieves the detection of the state of the audio amplifier 113, and the circuit structure may be simple.

The above are only embodiments of the present disclosure, which are not intended to limit the scope of the present disclosure, and any equivalent structure or equivalent process transformations utilizing the contents of the present disclosure and the accompanying drawings, or directly or indirectly applying them in other related technical fields, are included in the scope of patent protection of the present disclosure.

## Claims

1. A charging box, comprising a first housing assembly, wherein the first housing assembly includes a main box body with an opening at one end as an open end of the main box body and a support plate covering over the open end of the main box body, the support plate is provided with one or more profiling grooves for accommodating earphones, wherein
the support plate is provided with a first side edge and a second side edge opposite to each other, a depth of a portion of the profiling grooves near the first side edge is greater than a depth of a portion of the profiling grooves near the second side edge.

2. The charging box of claim 1, further comprising a circuit board disposed between the support plate and a bottom wall of the main box body, a projection of the circuit board on the bottom wall of the main box body being close to a projection of the second side edge on the bottom wall of the main box body.

3. The charging box of claim 2, wherein the profiling grooves include a first profiling region disposed near the first side edge and used to accommodate a main body portion of the earphones, a second profiling region disposed near the second side edge and used to accommodate a battery portion of the earphones, and a third profiling region connecting the first profiling region and the second profiling region and used to accommodate an elastic connection portion of the earphones, wherein a depth of a portion of the third profiling region near the first side edge is greater than a depth of the second profiling region.

4. The charging box of claim 3, wherein the profiling grooves include two profiling grooves, a spacing between the two third profiling regions of the two profiling grooves gradually decreases and then gradually increases in a direction from the first side edge to the second side edge, the support plate includes a first flat region located between the two third profiling regions of the two profiling grooves and close to the second side edge, and the projection of the circuit board on the bottom wall of the main box body overlaps with a projection of the first flat region on the bottom wall of the main box body.

5. The charging box of claim 4, wherein the support plate is further provided with a third side edge and a fourth side edge opposite to each other for connecting the first side edge and the second side edge, the support plate further includes two second flat regions located on two sides of the two third profiling regions and close to the third side edge and the fourth side edge, respectively, wherein the projection of the circuit board on the bottom wall of the main box body overlaps with a projection of at least one of the two second flat regions on the bottom wall of the main box body.

6. The charging box of claim 5, wherein the circuit board includes a first circuit region, a second circuit region, and a connection region, wherein a projection of the first circuit region on the bottom wall of the main box body overlaps with the projection of the first flat region on the bottom wall of the main box body, a projection of the second circuit region on the bottom wall of the main box body overlaps with the projection of the at least one of the second flat regions on the bottom wall of the main box body, the connection region connects the first circuit region and the second circuit region, and a projection of the connection region on the bottom wall of the main box body overlaps with a projection of the second profiling region on the bottom wall of the main box body.

7. The charging box of claim 6, wherein an overlap area between the projection of the connection region and the projection of the second profiling region is smaller than an overlap area between the projection of the first circuit region and the projection of the first flat region; and the overlap area between the projection of the connection region and the projection of the second profiling region is smaller than an overlap area between the projection of the second circuit region and the projection of the at least one of the second flat regions.

8. The charging box of claim 6, wherein the circuit board includes two groups of the second circuit regions and the connection regions, and the two groups of the second circuit regions and the connection regions are connected to two ends of the first circuit region, respectively, in a direction of a spacing of the third side edge and the fourth side edge to make the circuit board in a form of U-shape.

9. The charging box of claim 6, wherein the depth of the portion of the third profiling region near the first side edge is greater than a depth of the first profiling region, and the projection of the second circuit region on the bottom wall of the main box body further overlaps with a projection of the first profiling region on the bottom wall of the main box body.

10. The charging box of claim 6, wherein an overlap area between the projection of the circuit board on the bottom wall of the main box body and a projection of the third profiling region on the bottom wall of the main box body is less than 5% of a total area of the projection of the circuit board on the bottom wall of the main box body.

11. The charging box of claim 3, wherein an angle between a line connecting a lowest point of the third profiling region and a highest point of the second profiling region and a plane parallel to a side of the support plate forming the profiling grooves is in a range of 10° - 60°.

12. The charging box of claim 1, further comprising a second housing assembly and a rotary connection assembly pivotally connected to the first housing assembly, wherein the rotary connection assembly is disposed at the first side edge of the support plate for connecting the first housing assembly and the second housing assembly, and the first housing assembly is rotatably connected to the second housing assembly through the rotary connection assembly.
